# EUROPÄISCHE PATENTSCHRIFT

(11) **EP 0 859 452 B1**
(45) Veröffentlichungstag und Bekanntmachung des Hinweises auf die Patenterteilung: **03.11.1999**
(21) Anmeldenummer: 98101787.4
(22) Anmeldetag: 03.02.1998
(51) Int. Cl.: H02M 1/08, H02M 1/12, H02P 7/63

(54) **Verfahren und Vorrichtung zur Leistungssteuerung von an ein Wechselspannungs-Versorgungsnetz angeschlossenen elektrischen Verbrauchern**
Method and device for power control of electric consumers connected to an alternating voltage supply network
Procédé et dispositif de contrôle de puissance des consommateurs électriques connectés à un réseau d'alimentatin à tension alternative

(30) Priorität: 14.02.1997 DE 19705907; 14.02.1997 DE 29702524 U
(43) Veröffentlichungstag der Anmeldung: 19.08.1998
(73) Patentinhaber: Kurz, Gerhard, D-75382 Althengstett (DE)
(72) Erfinder: Schulz, Detlef, 72657 Altenriet (DE); Kurz, Gerhard, 75382 Althengstett (DE)
(74) Vertreter: Otte, Peter, Dipl.-Ing.

(56) Entgegenhaltungen:
- EP-A- 0 296 840
- EP-A- 0 489 948
- DE-A- 2 702 142

## Beschreibung

### Stand der Technik

Die Erfindung geht aus von einem Verfahren zur Leistungssteuerung von an ein Wechselspannungs-Versorgungsnetz angeschlossenen elektrischen Verbrauchern nach dem Oberbegriff des Anspruchs 1 bzw. von einer Vorrichtung zur Leistungssteuerung von elektrischen Verbrauchern zur Durchführung dieses Verfahrens nach dem Oberbegriff des Anspruchs 5.

Vorrichtungen zur Leistungssteuerung von elektrischen Verbrauchern, die an eine Wechselspannung, üblicherweise die Netzspannung angeschlossen sind, sind in vielfältiger Form bekannt und umfassen zumeist eine Phasenanschnittschaltung, durch welche sich der Zündwinkel bei der dem Verbraucher zugeführten elektrischen Wechselgröße in gewünschter Weise verstellen läßt, wodurch die zugeführte Leistung geregelt werden kann.

Bekannt sind solche Phasenanschnittsteuerungen beispielsweise aus der DE 33 03 126 C2, die eine Vorrichtung zur Einschaltstrombegrenzung bei einer mit einer Phasenanschnittsteuerschaltung versehenen Motorsteuerung für den Antriebsmotor eines Staubsaugers betrifft, sowie beispielsweise aus der DE 43 27 070 C1, in welcher eine Vorrichtung zur Regelung der Leistungsaufnahme eines Staubsaugers beschrieben ist, bei welcher über eine Phasenanschnittschaltung die dem den Staubsauger antreibenden Elektromotor zugeführte Wechselspannung auf einen solchen Wert geregelt wird, daß dieser dem Effektivwert dei Motorspannung entspricht. Die dabei jeweils verwendeten Phasenanschnitt-Steuerschaltungen enthalten üblicherweise einen Triac, der in Reihe mit dem elektrischen Verbraucher, in diesem Falle also Elektromotor, ans Netz geschaltet ist und den Elektromotor mit einer lückenden (Sinus)Spannung versorgt, je nach gewünschter Leistung.

Geht man von einer aus diskreten Bauelementen aufgebauten Schaltung für den Phasenanschnitt aus, wobei hier allerdings beliebig hoch integrierte Realisierungsmöglichkeiten bis zur reinen Mikroprozessorsteuerung denkbar und möglich sind, dann umfaßt die Phasenanschnittsteuerung im Ansteuerkreis für den Triac einen üblicherweise als Potentiometer oder Trimmer einstellbaren Widerstand sowie einen Ladekondensator zur Zündung des Triacs je nach eingestellten Widerstand, so daß durch entsprechende Verschiebung des Zündwinkels praktisch beliebige Zwischenleistungen bis zum Vollwinkel auf Wunsch abrufbar sind.

Bei einer bekannten Motorsteuerschaltung (DE 27 02 142 A1) sind zwei jeweils für eine Stromrichtung gepolte Thyristoren vorgesehen, zueinander parallel mit dem zu steuernden Motor in Reihe geschaltet, wobei der eine Thyristor einer normalen Phasenanschnittsteuerschaltung zugeordnet ist, während der andere Transistor im Sinne einer Drehzahlregelung lastabhängig gesteuert wird. Daher ergibt sich für die Halbwelle einer Stromrichtung ein gewollter (manuell vorgegebener) Halbwellenanschnitt zur Drehzahleinstellung entsprechend der Stellung eines Potentiometers, während der für die andere Halbwelle, also Stromrichtung zuständige Thyristor einen lastbedingten Drehzahlabfall ausgleicht, indem er stromabhängig gesteuert wird. Hierdurch ergeben sich jeweils innerhalb einer Vollwelle unterschiedliche Phasenanschnittwinkel, die aber nicht um einen vorgegebenen Zündwinkel bei aufeinanderfolgenden Vollwellen zeitlich nach vorn oder hinten verlagert variieren. Eine Oberwellenreduktion ist durch ein solches Vorgehen ausgeschlossen, weil eine Veränderung im Rhythmus unmittelbar aufeinanderfolgender positiver und negativer Halbwellen einer gegebenen Welle erfolgt und weil eine Langzeitvariation im Zündwinkel lediglich bei der einen Halbwelle lastabhängig erfolgt, also in einem um Größenordnungen unterschiedlichen Zeitmuster.

In vergleichbarer Weise wird bei einer Vorrichtung zur Einstellung eines Antriebdrehmomentes oder einer Drehzahl eines Elektromotors (DE 195 36 148 A1) eine Kombination aus einer Phasenanschnittsteuerung und einer Halbwellensteuerung eingesetzt, wobei zunächst lastabhängig mit größer werdendem Zündwinkel ausschließlich die Phasenanschnittsteuerung über einen vorgegebenen Zündwinkelbereich, anschließend ausschließlich die Halbwellensteuerung eingesetzt wird, bei der je nach erforderlicher Leistung eine oder mehrere Halbwellen der Speisespannung vollständig ausgeblendet werden.

Steigt der Zündwinkel über einen vorgegebenen Wert an oder ergeben sich bei bestimmten Zündwinkeln zu große Motorvibrationen, die von einem Vibrationsfühler erfaßt werden, dann wird der Motor so angesteuert, daß in einer Kombination aus Phasenanschnittsteuerung und Halbwellensteuerung der Motor mit einer vorgegebenen Anzahl von Vollwellen gespeist wird, die sich abwechseln mit einer vorgegebenen Anzahl von im Sinne einer Phasenanschnittsteuerung angeschnittenen Vollwellen. Eine Variation der Zündwinkel zeitlich nach vorn und rückwärts verlegt um einen vorgebenen Sollwinkel ist nicht angesprochen. Das Ganze verläuft so, daß anfänglich, ausgehend vom Stillstand der Motor ausschließlich mittels der Phasenanschnittsteuerung in seiner Drehzahl hochgesteuert wird; anschließend wird automatisch zunächst ausschließlich auf eine geräuschärmere Halbwellensteuerung umgeschaltet, wobei das Halbwellenmuster, welches ganzzahlige Züge von Halbwellen aufweist, unterbrochen von vollständig gesperrter Stromzufuhr, dieselbe Drehzahl wie der Phasenanschnitt erbringt.

Erst bei einer weiteren Erhöhung der Drehzahl wird dann unter kontinuierlicher Änderung des Zündwinkels eine Anzahl von Halbwellen mit der Phasenanschnittsteuerung additiv zu dem Halbwellenmuster an die Wicklung des Motors geschaltet. Erreicht der Zündwinkel einen Grenzwinkel, dann wird die Zahl der Halbwellen im Halbwellenmuster entsprechend der gewünschten Drehzahl erhöht, während die Zahl der angeschnittenen Halbwellen nach der Phasenanschnittsteuerung zurückgesetzt wird. Hinweise auf das Oberwellenverhalten bzw. die Möglichkeit einer Reduzierung von Oberwellen ergeben sich nicht.

Gerade im Zusammenhang mit Oberwellen ist es jedoch ein derzeit stärker in den Vordergrund rückendes Problem, daß die solchen Steuerschaltungen innewohnende Erzeugung von Oberwellen zu einer erheblichen Oberwellenverseuchung des Netzes führt, die bisher auch nicht durch einfache Mittel überwunden werden konnte. Zurückzuführen ist dies auf immer höher ausgelegte mögliche Maximalleistungen elektrischer Verbraucher, die dann durch gleichzeitig eingesetzte Phasenanschnittschaltungen wieder herabgeregelt werden, wobei im folgenden zum besseren Verständnis von der Leistung eines Staubsaugermotors beispielhaft ausgegangen werden soll, obwohl es sich versteht, daß die Erfindung auf jeden beliebigen elektrischen Verbraucher anwendbar ist.

Allgemein entstehen Oberwellen, wenn keine sinusförmige Stromaufnahme vorliegt, deren Frequenz identisch ist mit der Netzfrequenz. Im Falle des elektrischen Universalmotors entstehen zunächst Oberwellen hauptsächlich als ungeradzahlige Harmonische, die in erster Näherung auf die quadratische Abhängigkeit zwischen Strom und Spannung zurückzuführen sind. Zusätzliche Oberwellen entstehen durch die Phasenanschnittsteuerung selbst, die im übrigen besonders dann stark ausgeprägt sind, wenn sich der Zündwinkel bei etwa 90° befindet, wenn also durch entsprechende Zündung die Stromdurchlässigkeit des Reihentriacs in etwa in der Mitte der jeweiligen Halbwelle erfolgt.

Die erwähnte Grenze des zulässigen Oberwellengehalts wird durch staatlich regulierte Vorschriften festgelegt und wird für den europäischen Bereich durch die sogenannte EMV-Norm repräsentiert und die insofern auch eine Leistungsgrenze der zulässigen Motorleistung, die in numerischen Werten ausdrückt bei etwa 1200 bis 1400 W liegt, vorgibt, wenn man allgemein übliche elektrische Motoren mit den bekannten Phasenanschnittsteuerungen zugrunde legt.

Die sich durch diese Grenze ergebenden Probleme sind nur unter Einsatz hoher Kosten zu umgehen oder zu bekämpfen, wobei die Messungen üblicherweise bei einem Phasenwinkel von 90° und bezogen auf 16 aufeinanderfolgende Vollwellen durchgeführt werden, während welcher Zeit der Oberwellengehalt einen vorgegebenen Wert nicht überschreiten darf.

Es ist daher auch bekannt, dieses Problem dadurch zu umgehen, daß man auf der Hardwareseite, nämlich auf Seiten des Elektromotors, einen Motor mit zwei Feldwicklungen verwendet, dessen eine Feldwicklung für eine Leistungsabgabe bis beispielswiese maximal 1400 W zur Verfügung steht, die über eine Phasenanschnittsteuerung bei gerade noch zulässigem Oberwellengehalt betrieben werden kann, während bei einer stärkeren Leistungsanforderung dann über geeignete Schaltungsmittel (Mikroschalter) auf die andere Feldwicklung übergegangen wird bei vollständigem Herausschalten der Phasenanschnittsteuerung, wodurch dann die volle Leistung mit der zweiten Feldwicklung, die beispielsweise bei 1800 W liegen kann, im durchgehenden Vollwellenbetrieb, also ohne Phasenanschnittsteuerung, erreicht werden kann. Hierdurch entfällt dann natürlich der auf den Phasenanschnitt zurückgehende Oberwellengehalt gänzlich.

Solche bauaufwendigen Maßnahmen erfordern erhebliches zusätzliches Material mit entsprechenden hohen Kosten, nicht zuletzt auch Montagekosten, und machen gerade dann einen Verzicht auf die Phasenanschnittsteuerung erforderlich, wenn diese im Bereich der Abgabe der Höchstleistung unter Umständen zur feinfühligen Anpassung besonders erwünscht wäre.

Der Erfindung liegt daher die Aufgabe zugrunde, hier Abhilfe zu schaffen und ein Verfahren und eine Vorrichtung zur Leistungssteuerung von an ein Wechselspannungs-Versorgungsnetz angeschlossenen elektrischen Verbrauchern zu schaffen, um mit nur geringen schaltungstechnischen Änderungen der die Spannungsversorgung des Verbrauchers steuernden Phasenanschnittschaltung eine drastische Reduzierung des Oberwellengehaltes zu erreichen, so daß es möglich ist, auch höhere abzugebende Leistungen, beispielsweise bis 1800 W, um hier eine numerische Zahl zu nennen, innerhalb des vorgegebenen Oberwellengrenzwertes sicher zu beherrschen.

In einem anderen Zusammenhang sind ferner Spielarten von Direktumrichtern bekannt (DE 27 02 142 A1 und DE 195 36 148 A1), bei denen Wechsel- oder Drehstromsteller so angesteuert werden, daß der Phasenanschnittwinkel im Rhytmus einer Frequenz unterhalb der Netzfrequenz variiert wird. Ziel der Variation ist allerdings die Erzeugung einer Subharmonischen, mit der der gespeiste Drehfeldmotor dann mit einem Bruchteil der Nenndrehzahl laufen soll.

### Vorteile der Erfindung

Die Erfindung beruht auf der überraschenden Erkenntnis, daß durch die bewußte Herbeiführung einer Unsymmetrie im Zündwinkel zwischen zeitlich aufeinanderfolgenden, aber nicht notwendigerweise unmittelbar aufeinanderfolgender Vollwellen geradzahlige Harmonische nur langsam anwachsen, ungeradzahlig Harmonische jedoch stark reduziert werden können.

Das erfindungsgemäße Verfahren und die erfindungsgemäße Vorrichtung lösen daher die genannte Aufgabe jeweils mit den Merkmalen des Anspruchs 1 bzw. des Anspruchs 5, indem eine Variation des Zündwinkels um den vorgegebenen Zündwinkelsollwert herum vorgenommen wird, vorzugsweise in aufeinanderfolgenden Vollwellen, obwohl dies nicht unbedingt notwendig ist, sich jedoch als vorteilhaft erwiesen hat.

Durch diese Variation oder Einführung einer Unsymmetrie, was mit anderen Worten bedeutet, daß angewandt auf das spezifische Ausführungsbeispiel der Leistungsschalter (Triac) bevorzugt auf kontrollierte Art unregelmäßig gezündet wird, ergibt sich der Vorteil, daß sich entstehende Harmonische zum Teil selbst wieder aufheben und es daher trotz Beibehaltung der Phasenanschnittsteuerung bis zur maximalen Leistung hin möglich ist, innerhalb des vorgegebenen Grenzwertes beispielsweise der EMV-Norm zu verbleiben, obwohl, worauf auch hingewiesen werden soll, der auf den Universalmotor selbst zurückgehende Anteil an Oberwellen hierdurch nicht beeinflußbar ist und im Grunde auch niemals beeinflußt werden kann, da er auf die Bauart eines Elektromotors schlechthin (Eisengehalt) zurückzuführen ist.

Es ist daher möglich und besonders vorteilhaft, daß durch im Grunde nur geringfügige weitere Maßnahmen, die im Schaltungsbereich der Phasenanschnittsteuerung liegen, und daher vergleichsweise kostengünstig zu realisieren sind, gerade z.B. auch für im Haushaltsbereich liegende übliche elektrische Antriebsmotoren ein erheblicher zusätzlicher Leistungszuwachs ermöglicht wird, innerhalb des vorgeschriebenen Oberwellengehalts der EMV-Norm und ohne daß es größerer Änderungen der Gesamtkonsumtion bedarf, so daß durch die Erfindung ein entscheidender Vorteil durch den Einsatz nur geringer Mittel erreicht wird.

Durch die in den Unteransprüchen aufgeführten Maßnahmen sind vorteilhafte Weiterentwicklungen und Verbesserungen der im Hauptanspruch angegebenen Lösung möglich.

Besonders vorteilhaft ist die Anordnung eines zusätzlichen parallelen Widerstandes im Ansteuerkreis für den Triac, wodurch dessen potentiometrischer Widerstand eine (periodische) Änderung erfährt, und wobei dieser zusätzliche Widerstand so im Rhythmus der aufeinanderfolgenden Vollwellen gesteuert wird, daß sich in einer ersten Vollwelle ein um einen vorgegebenen Zündwinkelwert nach vorn, also in Richtung größerer Leistungsabgabe, verlegter Zündwinkel und in einer darauffolgenden Vollwelle ein zeitlich nach hinten verlegter Zündwinkelwert, also in Richtung auf geringere Leistungsabgabe ergibt, je nachdem, ob der parallele Widerstand in dieser Vollwellenperiode zugeschaltet oder abgeschaltet ist.

Allerdings sei hier nochmals darauf hingewiesen, daß dies lediglich eine besonders vorteilhafte Realisierung einer Phasenanschnittschaltung betrifft und die angesprochene Möglichkeit der Zündwinkelvariierung durch eine Vielzahl anderer Maßnahmen in hochintegrierter, teilhybrider und diskreter Schaltungstechnik erreichen läßt.

### Zeichnung

Ausführungsbeispiele der Erfindung sind in der Zeichnung dargestellt und werden in der nachfolgenden Beschreibung nach Aufbau und Wirkungsweise im einzelnen erläutert. Es zeigen:
- Fig. 1: den zeitlichen Verlauf einer Verbraucher-Speisewechselspannung, wobei bei lückendem Betrieb durch die Phasenanschnittschaltung erkennbar ist, daß, wie in durchgezogener Linienführung gezeigt, der tatsächliche Zündwinkel in einer Vollwelle zu früh und in der nachfolgenden Vollwelle zu spät liegt, verglichen mit dem Sollwert des Zündwinkels α;
- Fig. 2: den Verlauf des Differenzwinkels δ über dem Sollwert des Zündwinkels α und
- Fig. 3: ein mögliches und auch bevorzugtes Ausführungsbeispiel einer Phasenanschnittschaltung in diskreten Bauelementen, zur Reduzierung des Oberwellenanteils bei elektrischen Verbrauchern.

### Beschreibung der Ausführungsbeispiele

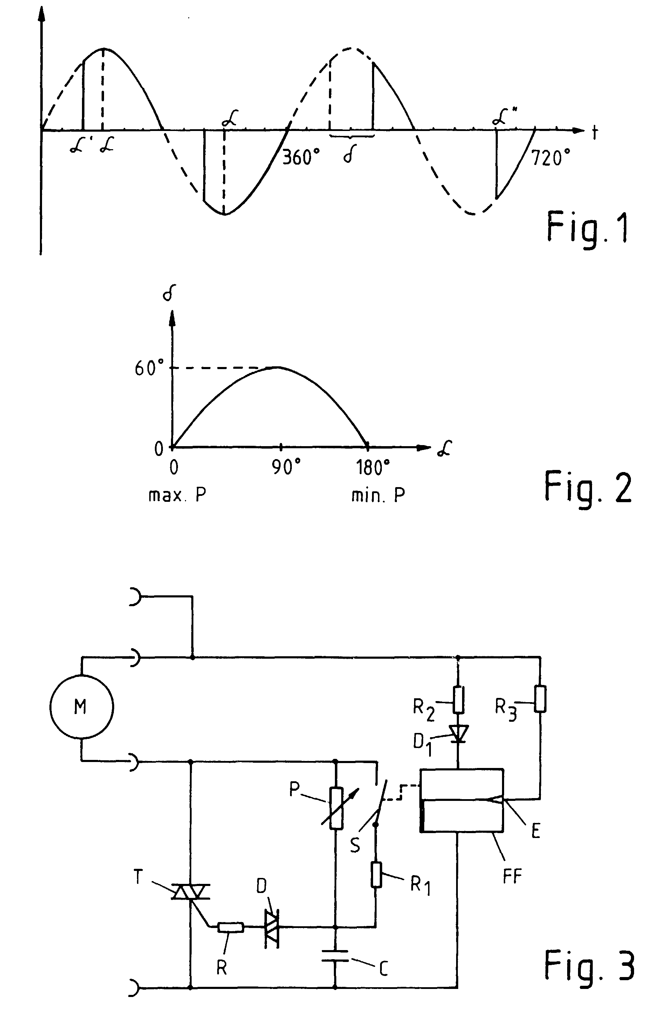

Betrachtet man zunächst den im Grundsatz sinusförmig im Verlauf beispielsweise einer Speisewechselspannung für einen elektrischen Verbraucher, dann läßt sich dem Diagramm der Fig. 1 entnehmen, daß an der ersten Vollwelle (siehe jeweils die dick durchgezogene Linienführung) ein kleinerer tatsächlicher Zündwinkel α' vorhanden ist, verglichen mit dem Zündwinkel α'' in der zweiten Vollwelle, die sich daher um den Differenzwinkel δ unterscheiden.

Mit anderen Worten bedeutet dies, daß in der ersten Vollwelle bei kleinerem α' mit eher großer, eigentlich mit zu großer Leistung gefahren wird, während in der zweiten Vollwelle mit dem zu großen Zündwinkel α'' mit kleiner, und zwar zu kleiner Leistung gefahren wird, immer bezogen auf den tatsächlichen Leistungsanspruch, der durch den Sollwert-Zündwinkel α gegeben ist, der bei diesem Ausführungsbeispiel der Einfachheit halber bei 90° liegen soll und der natürlich selbst, z.B. durch äußeren Eingriff, wieder verstellbar ist.

Daher liegt bei diesem Ausführungsbeispiel der erste Zündwinkel α' bei 60° und der zweite Zündwinkel α'' bei 120°; der Differenzwinkel δ beträgt somit 60°.

Diese Variation oder Unsymmetrie des Zündwinkels in nacheinander ablaufenden Vollwellen (nicht notwendigerweise unmittelbar aufeinanderfolgender Vollwellen) der den Verbraucher speisenden Wechselspannungsgröße beruht auf der weiter vorn schon erwähnten Erkenntnis, daß dann, wenn eine solche Unsymmetrie des Zündwinkels nicht zwischen positiver und negativer Halbwelle einer Vollwelle, sondern zeitlich zwischen zwei aufeinanderfolgenden Wellen erzeugt wird, die geradzahligen Harmonischen langsam anwachsen und die ungeradezahligen stark reduziert werden. Dies kommt gerade der Leistungssteuerung bei einem Elektromotor entgegen, der von sich aus schon eher ungeradezahlige Harmonische erzeugt, die sich durch Schaltungen, wie eben schon erwähnt, natürlich nicht beeinflussen lassen. Insgesamt wird hierdurch aber durch die aufeinanderfolgenden Unsymmetrien der Zündwinkelverteilung in Abweichung vom Sollwert des Zündwinkels α der Gesamtoberwellengehalt soweit herabgesetzt, daß den Grenzwertbedingungen der erwähnten Vorschriften Genüge getan werden kann.

Dabei ergibt sich natürlich keine Abweichung von dem gewünschten Leistungsollwert des Verbrauchers, da die tatsächlichen Zündwinkel α', α'' um den Sollwert des Zündwinkels herum variieren, nämlich einmal nach der einen und zum anderen nach der anderen Seite, also sozusagen mit Vorzündung und mit Nachzündung arbeiten, wobei der Zündwinkelversatz, also der Differenzwinkel δ bevorzugt, z.B. bei einem angenommenen Sollwert des Zündwinkels α von 90° maximal, beispielsweise 60° betragen sollte, wie der Diagrammverlauf der Fig. 2 zeigt. Bei Annäherung an die maximale Leistung, d.h. je kleiner der Sollwert des Zündwinkels α selbst wird und im äußersten Fall bei einem Zündwinkel α von 0°, wenn gar kein Phasenanschnitt mehr erfolgt, ist natürlich auch der Differenzwinkel δ = 0. In diesem Fall wird die Zündwinkelvariation aber auch nicht mehr benötigt, da durch die Phasenanschnittschaltung im wesentlichen keine Oberwellen mehr erzeugt werden. Gleiches trifft auf die Leistungsabgabe 0, also maximalen Sollwert des Zündwinkels α zu. Auch in diesem Falle, wenn also der Reihentriac bei einem bevorzugten Ausführungsbeispiel einer Phasenanschnittschaltung gar nicht mehr öffnet, ist der Differenzwinkel δ ebenfalls gleich Null (siehe hierzu den Kurvenverlauf der Fig. 2).

Anschaulich läßt sich das durch die Erfindung gefundene Prinzip so verstehen, daß in der Vollwelle mit großem Zündwinkel (entsprechend kleiner Leistung) die dritte Harmonische klein und in der Phase zum Nulldurchgang hin verschoben ist. In der Vollwelle mit kleinem Zündwinkel (entsprechend großer Leistung) ist die dritte Harmonische zwar kräftig, jedoch in der Phase in umgekehrter Richtung verschoben, so daß sich die zwei dritten Harmonischen, die aus den beiden Vollwellen mit unterschiedlichem Zündwinkel von jeweils α' und α'' resultieren, zum Teil selbst aufheben können. Für die anderen Harmonischen können ähnliche Betrachtungen angestellt werden, die aber im Vergleich zur dritten Harmonischen weniger bis unbedeutend sind.

### Meßbeispiel

An einem Versuchsaufbau mit einem Motor mit einer Leistung von 1200 W ergab sich bei einem Sollwert-Zündwinkel α von 90° eine ursprüngliche dritte Harmonische von 2,3 A. Durch einen Zündwinkelversatz von 45° jeweils nach vorn und nach hinten, d.h. beispielsweise von einem α' von 45° und einem α'' von 135° ergab sich eine Reduzierung dieser dritten Harmonischen von den erwähnten 2,3 A auf 1,5 A, wobei der Motor selbst unter voller Last eine dritte Harmonische von 1,3 A verursachte. Gleichzeitig wuchs die vierte Harmonische von ca. 50 mA auf 300 mA an, verblieb also selbst schon in diesem Bereich eher unbedeutend.

Diese Messungen verifizieren eine durchaus drastische Abnahme des Oberwellen-Gesamtgehalts allein durch die durch die Erfindung gewährleistete Zündwinkelvariation, die sich in einfacher Weise wie im folgenden beschrieben realisieren läßt.

### Schaltungsaufbau mit Zündwinkel-Unsymmetrie

Entsprechend Fig. 3 sind als übliche Bestandteile einer Phasenanschnittsteuerung der Verbraucher M als Elektromotor und der in beiden Halbwellen leitend schaltbare Reihentriac zum Motor M mit T angegeben.

Im Ansteuerkreis des Motors befindet sich neben dem üblichen Kondensator C ein entsprechendes Reihenpotentiometer P, wobei vom Verbindungspunkt des Kondensators C und des Reihenpotentiometers P über einen Diac D und einen Reihenwiderstand R die Ansteuerung des Triac-Gates erfolgt.

Parallel zum Widerstand des Potentiometers P ist ein weiterer Widerstand R1 geschaltet, der in Reihe mit einem Schalter S liegt, der im geschlossenen Zustand den parallelen Widerstand R1 zum Widerstandswert des Potentiometers P wirksam werden läßt bzw. im geöffneten Zustand herausschaltet.

Angesteuert wird der Schalter S, der ein beliebiger elektronischer, vorzugsweise transistorisierter schneller Schalter sein kann, in diesem Falle von einem Flipflop FF, welches an seinem Eingang E über einen Widerstand R3 mit der halben Netzfrequenz periodisch umgeschaltet wird; die Speisung des Flipflops FF erfolgt über die Reihenschaltung eines Widerstandes R2 mit einer Diode D1.

Wie bekannt erfolgt bei einer normalen Phasenanschnittsteuerung unabhängig von der Polarität und der Zeit bei einem bestimmten Winkel die Zündung des Triacs, wobei sich der Zündwinkel durch die Einstellung des Potentiometers verändern läßt. Durch die zusätzliche periodische Veränderung dieses Widerstands des Potentiometers P mit der halben Netzfrequenz (beim Ausführungsbeispiel also 25 Hz, wenn eine deutsche oder europäische Netzfrequenz von 50 Hz zugrunde gelegt wird) läßt sich erreichen, daß der Parallelwiderstand R1 in der einen Vollwelle bei geschlossenem Schalter dem leistungsstellenden Potentiometer P parallel liegt und in der nächsten Vollwelle bei geöffnetem Schalter wieder herausgeschaltet ist. Dies führt zu einer entsprechenden periodischen Änderung des Widerstandswerts des Potentiometers P und einer entsprechenden Verlagerung des Zündwinkels α zeitlich nach vorn oder hinten auf die Werte α' bzw. α" wie in Fig. 1 gezeigt, wodurch der gewünschte Zweck erreicht ist. Dabei wird das Flipflop FF durch die halbe Netzfrequenz im positiven Nulldurchgang getriggert.

Es wird nochmals darauf aufmerksam gemacht, daß die Erfindung durch dieses anhand der Zusammenstellung von diskreten Bauelementen erläuterte Ausführungsbeispiel einer Phasenanschnittschaltung nicht eingeschränkt oder der erfinderische Rahmen vorgegeben wird, sondern die Erfindung kann durch beliebige schaltungstechnische Maßnahmen realisiert werden und auch in hochintegrierter Form etwa anhand eines schnellen Mikroprozessors realisiert werden. Es ist auch möglich, jeweils auf den Anwendungszweck bezogen, eine größere Anzahl von Vollwellen mit einem vorgegebenen ersten Wert eines Zündwinkels α' zu steuern und erst nach Ablauf von einigen Vollwellen auf den zweiten, in der entgegengesetzten Richtung zum Sollwert des Zündwinkels versetzten Zündwinkel überzugehen, wobei empirische Versuche gut geeignet sind um festzustellen, ob und in welcher Weise der jeweils angesteuerte Verbraucher hierdurch beeinflußt wird, beispielsweise durch Änderung der von ihm abgegebenen Geräuschentwicklung, Flackern bei Lichtbänken u.dgl.. Es versteht sich auch, daß keine Beschränkung auf die jeweiligen vorhandenen oder von den Versorgungswerken zur Verfügung gestellten Netzfrequenzen erforderlich ist; nötigenfalls kann mit anderen Frequenzen, mit Frequenzverdoppelung u.dgl. gearbeitet werden, soweit sich dies als sinnvoll erweist, auch ein Bereich der Ansteuerung der Zeitkonstantenansteuerung für die Triac-Zündung. Hier könnte im übrigen auch mit jedem beliebigen, technisch noch sinnvollen zeitlichen Verteilungsmuster, gegebenenfalls auch stochastischer Natur, gearbeitet werden.

## Patentansprüche

1. Verfahren zur Leistungssteuerung von an ein Wechselspannungs-Versorgungsnetz angeschlossenen elektrischen Verbrauchern, insbesondere Elektromotoren, elektrische Universalmotoren zum Betrieb von Elektrogeräten, Küchengeräten, Staubsaugern u.dgl., von ohm'schen Verbrauchern wie Elektroheizungen o.dgl., durch Änderung des Phasenanschnitts der dem Verbraucher zugeführten elektrischen Wechselgröße, dadurch gekennzeichnet, daß zur Reduzierung des Oberwellengehalts der das Ausmaß des Phasenanschnitts bestimmende Zündwinkel (α', α") bei aufeinanderfolgenden Vollwellen um den vorgegebenen, der gewünschten Leistungsaufnahme entsprechenden Sollwert (α) des Zündwinkels herum sowohl nach größeren als auch kleineren Werten variiert wird, derart, daß bei gleichzeitigem langsamen Anwachsen geradzahliger Harmonischer ungeradzahlige Harmonische stark reduziert werden.

2. Verfahren nach Anspruch 1, dadurch gekennzeichnet, daß eine Unsymmetrie des Zündwinkels zeitlich zwischen zwei direkt aufeinanderfolgenden Vollwellen erzeugt wird.

3. Verfahren nach Anspruch 1 oder 2, dadurch gekennzeichnet, daß bei einer ersten Vollwelle der tatsächliche Zündwinkel (α1) gegenüber dem Sollwert des Zündwinkels (α) in beiden Halbwellen kleiner und bei einer unmittelbar darauffolgenden Vollwelle der tatsächliche Zündwinkel (α") gegenüber dem Sollwert-Zündwinkel (α) vorzugsweise um den gleichen Betrag größer ist, wodurch daß sich die durch die Phasenanschnittsteuerung selbst erzeugten dritten Harmonischen mindestens teilweise selbst aufheben.

4. Verfahren nach einem der Ansprüche 1 bis 3, dadurch gekennzeichnet, daß die tatsächliche Zündwinkelvariation in zeitlich aufeinanderfolgenden Vollwellen auch stochastisch mit hoher Wahrscheinlichkeit gegenläufiger Entwicklungen innerhalb weniger Vollwellen durchgeführt wird.

5. Vorrichtung zur Leistungssteuerung von an ein Wechselspannungs-Versorgungsnetz angeschlossenen elektrischen Verbrauchern, insbesondere Elektromotoren oder elektrischen Universalmotoren zum Betrieb von Elektrogeräten, Küchengeräten, Staubsaugern, von ohm'schen Verbrauchern wie Elektroheizungen u.dgl., wobei durch die Leistungssteuerung eine Änderung des Phasenanschnittwinkels eines dem Verbraucher in Reihe geschalteten Triac's (T) und der dem Verbraucher zugeführten elektrischen Größe vorgenommen wird, dadurch gekennzeichnet, daß eine den tatsächlichen Zündwinkel (α', α") um den Sollwert (α) des Zündwinkels der gewünschten Leistungsaufnahme variierende Steuerschaltung vorgesehen und so ausgebildet ist, daß innerhalb weniger Vollwellen, vorzugsweise unmittelbar aufeinanderfolgend, der Zündwinkel (α', α") sowohl nach größeren als auch nach kleineren Werten verändert wird.

6. Vorrichtung nach Anspruch 5, wobei dem Triac, pro (direkt) aufeinanderfolgender Vollwellen der zum Verbraucher zu schaltenden Versorgungsspannung unterschiedliche Zündwinkelsignale zugeführt sind.

7. Vorrichtung nach Anspruch 5 oder 6, dadurch gekennzeichnet, daß dem Triac (T) ein Zündwinkel-Steuergerät zugeordnet ist, welches bei unmittelbar oder zeitlich im nahen Abstand aufeinanderfolgenden Vollwellen der den Verbraucher speisenden elektrischen Wechselgröße dem Triac tatsächliche Zündwinkelsignale (α', α") zuführt, die gegenüber dem Sollwert des Zündwinkels (α) bei einer vorgegebenen Leistungsabgabe zeitlich nach vorn oder hinten um vorzugsweise gleiche Winkeldifferenzbeträge versetzt. sind.

8. Vorrichtung nach Anspruch 7, dadurch gekennzeichnet, daß dem einstellbaren Widerstand (Potentiometer P) im Ansteuerkreis (Potentiometer P und Kondensator C) des Triacs (T) ein mit der halben Netzfrequenz schaltendes Kippglied (Flipflop FF) zugeordnet ist, welches mittels eines Schalters (S) dem leistungsstellenden Potentiometer (P) einen Widerstand (R1) vorgegebener Größe in der einen Vollwelle parallelschaltet und in der nächsten oder in einer der nächstfolgenden Vollwellen durch Öffnung des Schalters wegschaltet.

## Claims

1. A method of power control of electric consumers connected to an alternating-voltage supply mains, in particular electric motors, electric universal motors for operating electrical equipment, kitchen appliances, vacuum cleaners and the like, of resistive consumers such as electric heating or the like, by changing the phase angle of the electric alternating quantity supplied to the consumer, characterised in that to reduce the harmonic content, the firing angle (α', α") determining the extent of the phase angle is varied, in accordance with both larger and smaller values, with successive full waves around about the preset firing-angle rated value (α) corresponding to the desired power consumption, in such a manner that with a simultaneous slow increase in even harmonics, odd harmonics are greatly reduced.

2. A method in accordance with Claim 1, characterised in that chronologically, asymmetry of the firing angle is produced between two immediately successive full waves.

3. A method in accordance with Claim 1 or 2, characterised in that with a first full wave, the actual firing angle (α1) is smaller in both half waves as compared with the rated value of the firing angle (α), and with an immediately following full wave, the actual firing angle (α") is greater preferably by the same amount as compared with the set-value firing-angle (α), whereby in that the third harmonics produced by the phase-angle control itself at least partially cancel themselves out.

4. A method in accordance with any one of Claims 1 to 3, characterised in that the actual firing angle variation in chronologically successive full waves is also carried out stochastically within a few full waves with a high probability of contrary developments.

5. A device for power control of electric consumers connected to an alternating-voltage supply mains, in particular electric motors or electric universal motors for operating electrical equipment, kitchen appliances, vacuum cleaners, of resistive consumers such as electric heating and the like, a change in the operating angle of a triac (T) connected in series with the consumer and in the electric quantity supplied to the consumer being carried out by the power control, characterised in that a control circuit varying the actual firing angle (α', α") about the rated value (α) of the firing angle of the desired power consumption is provided and is such that within a few full waves, these preferably being immediately successive, the firing angle (α', α") is altered in accordance with both larger and smaller values.

6. A device in accordance with Claim 5, different firing-angle signals being supplied to the triac per (immediately) successive full waves of the supply voltage to be connected to the consumer.

7. A device in accordance with Claim 5 or 6, characterised in that a firing-angle control unit is associated with the triac (T) and with full waves - which are directly successive or are in close succession - of the electric alternating quantity feeding the consumer supplies actual firing-angle signals (α', α") to the triac, with a preset power output these signals being displaced chronologically ahead or behind as compared with the rated value of the firing angle (α) by preferably identical angular difference amounts.

8. A device in accordance with Claim 7, characterised in that a bistable (flip-flop FF) connecting with the half mains-frequency is associated with the adjustable rheostat (potentiometer P) in the trigger circuit (potentiometer P and capacitor C) of the triac (T), which bistable in one full wave connects - by means of a switch (S) - a resistor (R1) of preset magnitude in parallel with the power-adjusting potentiometer (P) and in the next or in one of the following full waves disconnects it by opening the switch.

## Revendications

1. Procédé pour contrôler la puissance d'appareils consommateurs d'électricité qui sont raccordés à un réseau d'alimentation à tension alternative, en particulier de moteurs électriques, de moteurs électriques universels, servant à faire fonctionner des appareils électriques, des appareils de cuisine, des aspirateurs électriques et des appareils analogues, des appareils consommateurs d'électricité à résistance ohmique tels que des appareils électriques de chauffage ou analogues, en modifiant l'angle de flux de la grandeur électrique alternative amenée à l'appareil consommateur de courant,
caractérisé en ce que
pour réduire la teneur en ondes harmoniques on fait varier l'angle d'amorçage (α', α ") qui détermine l'amplitude de l'angle de flux lors d'ondes pleines consécutives autour de la valeur de consigne prédéfinie α, correspondant à la puissance que l'on veut recevoir, aussi bien dans le sens des valeurs plus grandes que dans celui des valeurs plus petites aussi, d'une manière telle que lors de la croissance lente simultanée d'harmoniques d'ordre pair les harmoniques d'ordre impair soient fortement réduites.

2. Procédé selon la revendication 1,
caractérisé en ce qu'
on produit une dissymétrie de l'angle d'amorçage dans le temps entre deux ondes pleines directement consécutives.

3. Procédé selon la revendication 1 ou 2,
caractérisé en ce que
lors d'une première onde pleine l'angle d'amorçage effectif (α1) est plus petit par rapport à la valeur de consigne de l'angle d'amorçage (α) dans les deux demi-ondes et lors d'une onde pleine directement consécutive l'angle d'amorçage effectif (α") est plus grand par rapport à la valeur de consigne de l'angle d'amorçage (α) de préférence du même montant, du fait que les troisièmes harmoniques, produits par la commande de l'angle de flux lui-même, s'éliminent d'eux-mêmes au moins en partie.

4. Procédé selon l'une des revendications 1 à 3,
caractérisé en ce que
la variation effective de l'angle d'amorçage est réalisée dans des ondes pleines consécutives dans le temps aussi de façon aléatoire avec une probabilité élevée de développements en sens contraire pendant quelques ondes pleines.

5. Dispositif de contrôle de la puissance d'appareils consommateurs de courant électrique raccordés à un réseau d'alimentation en tension alternative, en particulier de moteurs électriques, de moteurs électriques universels, servant à faire fonctionner des appareils électriques, des appareils de cuisine, des aspirateurs électriques, des appareils consommateurs d'électricité à résistance ohmique tels que des appareils électriques de chauffage ou analogues, dans lequel on réalise par le contrôle de la puissance une variation de l'angle de flux d'un triac (T), monté en série avec l'appareil consommateur de courant, et de la grandeur électrique amenée à l'appareil consommateur de courant,
caractérisé en ce qu'
on prévoit et on constitue un circuit de commande qui fait varier l'angle d'amorçage (α', α") effectif de la valeur de consigne (α) de l'angle d'amorçage de la puissance que l'on veut recevoir, d'une manière telle qu'à l'intérieur de quelques ondes pleines, de préférence directement consécutives, l'angle d'amorçage (α', α") est modifié aussi bien dans le sens de valeurs plus grandes que dans le sens de valeurs plus petites.

6. Dispositif selon la revendication 5,
caractérisé en ce que
des signaux d'angles d'amorçage différents sont amenés au triac, par ondes pleines (directement) consécutives de la tension d'alimentation à fournir à l'appareil consommateur de courant.

7. Dispositif selon la revendication 5 ou la revendication 6,
caractérisé en ce que
un appareil de commande de l'angle d'amorçage est associé au triac (T), appareil qui, dans le cas d'ondes pleines, directement consécutives ou se suivant dans le temps de façon rapprochée, de la grandeur électrique alternative alimentant l'appareil consommateur de courant, amène des signaux (α', α") d'angle d'amorçage effectif au triac, signaux qui sont décalés dans le temps en avant ou en arrière de préférence des mêmes montants de différence angulaire par rapport à la valeur de consigne de l'angle d'amorçage (α) lors de la délivrance d'une puissance prédéfinie.

8. Dispositif selon la revendication 7,
caractérisé en ce que
un dispositif à déclenchement (flipflop FF), qui se déclenche avec la demi fréquence du réseau, est associé à la résistance réglable (Potentiomètre P) dans le circuit d'attaque (Potentiomètre P et Condensateur C) du triac (T), dispositif de déclenchement qui branche, au moyen d'un commutateur (S), en parallèle au potentiomètre (P) qui règle la puissance, une résistance (R1) d'une grandeur prédéfinie dans l'une des ondes pleines et débranche en ouvrant le commutateur lors de l'onde pleine suivante ou lors de l'une des ondes pleines consécutives.
